(19) Europäisches Patentamt
European Patent Office
Office européen des brevets

(11) **EP 3 797 043 B1**

(12) **EUROPÄISCHE PATENTSCHRIFT**

(45) Veröffentlichungstag und Bekanntmachung des Hinweises auf die Patenterteilung:
**29.03.2023   Patentblatt 2023/13**

(21) Anmeldenummer: **19725313.1**

(22) Anmeldetag: **15.05.2019**

(51) Internationale Patentklassifikation (IPC):
**B60K 1/00** *(2006.01)*        **F16H 48/10** *(2006.01)*

(52) Gemeinsame Patentklassifikation (CPC):
**B60K 1/00; F16H 48/10;** B60K 2001/001;
B60Y 2400/73; F16H 2048/104; F16H 2048/106

(86) Internationale Anmeldenummer:
**PCT/EP2019/062416**

(87) Internationale Veröffentlichungsnummer:
**WO 2019/224061 (28.11.2019 Gazette 2019/48)**

(54) **GETRIEBEANORDNUNG**

TRANSMISSION ARRANGEMENT

AGENCEMENT D'ENGRENAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2018   DE 102018208044**

(43) Veröffentlichungstag der Anmeldung:
**31.03.2021   Patentblatt 2021/13**

(73) Patentinhaber: **Robert Bosch GmbH**
**70442 Stuttgart (DE)**

(72) Erfinder: **REUTLINGER, Kurt**
**70174 Stuttgart (DE)**

(56) Entgegenhaltungen:
**DE-A1-102011 102 749      DE-A1-102015 218 252**
**US-A- 5 845 732**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 797 043 B1

## Beschreibung

Technisches Gebiet

Die Erfindung bezieht sich auf eine Getriebeanordnung mit einer ersten Planetenradstufe und einer zweiten Planetenradstufe, wobei die Getriebeanordnung durch einen Rotor einer E-Maschine angetrieben wird, die im teilelektrifizierten Triebstrang eines Fahrzeugs aufgenommen ist.

Stand der Technik

DE 10 2011 102 749 A1 bezieht sich auf eine Getriebeanordnung für ein Kraftfahrzeug. Die Getriebeanordnung umfasst ein Gehäuse, eine E-Maschine mit einem gehäusefesten Stator und einem relativ zu dem Stator drehbar gelagerten Rotor. Es ist eine Getriebeeinrichtung vorgesehen mit einem ersten stirnverzahnten Planetengetriebe, welches mittels seiner Eingangswelle mit dem Rotor und mittels seiner Ausgangswelle mit einer ersten Achsflanschwelle verbunden ist. Ferner ist ein zweites stirnverzahntes Planetengetriebe vorgesehen, welches mittels seiner Eingangswelle mit einer Koppelwelle des ersten Planetengetriebes und mittels seiner Ausgangswelle mit einer zweiten Achsflanschwelle verbunden ist. Das erste Planetengetriebe weist ein seine Eingangswelle bildendes, koaxial zum Rotor angeordnetes und mit diesem verbundenes erste Sonnenrad, ein seine Koppelwelle bildendes Hohlrad und einen seine Ausgangswelle bildenden, koaxial zum Rotor sowie koaxial zu der ersten Achsflanschwelle angeordneten und mit diesem verbundenen Steg, welcher einen einfachen Satz drehbar gelagerter erster Planetenräder trägt, die einerseits mit dem ersten Sonnenrad und andererseits mit dem ersten Hohlrad kämmen, auf. Das zweite Planetengetriebe weist ein zweites Sonnenrad und einen gehäusefesten zweiten Steg, welcher einen einfachen Satz drehbar gelagerter zweiter Planetenräder trägt, die mit dem zweiten Sonnenrad kämmen, auf. Das zweite Planetengetriebe ist als ein einfaches Minus-Planetengetriebe mit einem zweiten Hohlrad ausgebildet, dessen zweite Planetenräder zusätzlich mit dem zweiten Hohlrad kämmen.

Gemäß dieser Lösung bildet das Sonnenrad des ersten Planetensatzes die Eingangsstufe vom Rotor der E-Maschine. Der Planetenträger ist das Ausgangselement an eine erste Radachse, wobei das Hohlrad das Koppelelement zum zweiten Planetensatz darstellt. Der zweite Planetensatz gemäß der Lösung nach DE 10 2011 102 749 A1 bildet ein Negativgetriebe, wobei der Planetenträger am Gehäuse fixiert ist. Entweder wird das Sonnenrad des zweiten Planetensatzes mit dem Hohlrad des ersten gekoppelt, oder beide Hohlräder sind miteinander gekoppelt. Das jeweils verbleibende Element bildet dann den Abgang für die zweite Radachse. Nachteilig bei dieser Anordnung ist der Umstand, dass der Antrieb über das Sonnenrad erfolgt und dieser zur Hohlwelle ausgeführt werden muss. Der Abtrieb auf das erste Rad der Achse muss innerhalb der Hohlwelle des Antriebs nach außen geführt werden, was eine konstruktiv relativ aufwendige Lösung darstellt.

Aus der DE 10 2015 218 252 A1 ist eine durch eine E-Maschine angetriebene Getriebeanordnung mit einer ersten Planetenradstufe und einer zweiten Planetenradstufe bekannt, wobei Stufenplanetenräder der ersten Planetenradstufe mit einem ersten Sonnenrad der ersten Planetenradstufe und Planetenräder der zweiten Planetenradstufe mit einem zweiten Sonnenrad der zweiten Planetenradstufe kämmen, wobei das erste Sonnenrad der ersten Planetenradstufe mit dem zweiten Sonnenrad der zweiten Planetenradstufe über eine Koppelwelle gekoppelt ist. Weitere Getriebeanordnungen sind aus der DE 10 2011 102 749 A1 und der US 5 845 732 A bekannt.

Darstellung der Erfindung

Es wird eine Getriebeanordnung vorgeschlagen, welche eine erste Planetenradstufe und eine zweite Planetenradstufe umfasst, wobei die Getriebeanordnung durch einen Rotor einer E-Maschine angetrieben ist und die erste Planetenradstufe ein erstes Sonnenrad und die zweite Planetenradstufe ein zweites Sonnenrad umfasst, wobei die Stufenplanetenräder der ersten Planetenradstufe mit dem ersten Sonnenrad und Planetenräder der zweiten Planetenradstufe mit dem zweiten Sonnenrad kämmen, wobei entweder das erste Sonnenrad der ersten Planetenradstufe mit dem zweiten Sonnenrad der zweiten Planetenradstufe über eine Koppelwelle direkt gekoppelt ist, oder alternativ ein Planetenträger, an dem die Stufenplanetenräder der ersten Planetenradstufe aufgenommen sind, mit einem zweiten Hohlrad der zweiten Planetenradstufe verbunden ist, innerhalb dessen die Planetenräder der zweiten Planetenradstufe umlaufen. Erfindungsgemäß bildet ein erstes Hohlrad der ersten Planetenradstufe mit dem Rotor der E-Maschine eine bauliche Einheit. Diese kann entweder durch eine Schrumpfverbindung oder eine Schraubverbindung zwischen dem ersten Hohlrad und dem Rotor der E-Maschine hergestellt werden. Alternativ besteht die Möglichkeit, das erste Hohlrad und den Rotor der E-Maschine als ein Bauteil zu fertigen.

In der erfindungsgemäß vorgeschlagenen Lösung ist vorgesehen, den Rotor der E-Maschine mit dem Hohlrad der ersten Planetenradstufe zu verbinden, indem das Hohlrad der ersten Planetenradstufe baulich in den Rotor der E-Maschine integriert ist, da diese fest verbunden sind, oder es kann eine bauliche Einheit hergestellt werden.

Die zweite Planetenradstufe kann ein Negativgetriebe darstellen. Die zweite Planetenradstufe besitzt eine Standübersetzung, die betragsmäßig > 1 ist. Die erste Planetenradstufe hingegen realisiert durch die Stufenplanetenräder eine Standübersetzung, die betragsmäßig < 1 ist.

In Weiterbildung der erfindungsgemäß vorgeschlagenen Lösung stehen für die Kopplung zwischen der ersten Planetenradstufe und der zweiten Planetenradstufe zwei Möglichkeiten zur Verfügung: Gemäß einer ersten Ausführungsvariante kann das erste Fahrzeugrad über den Planetenträger der ersten Planetenradstufe angetrieben sein. Das zweite Fahrzeugrad hingegen wird über das Hohlrad der zweiten Planetenradstufe angetrieben. Die beiden Sonnenräder sind hier fest verbunden und bilden die Kopplung zwischen den beiden Planetenradstufen.

Alternativ besteht die Möglichkeit, den Planetenträger der ersten Planetenradstufe mit dem ersten Hohlrad der ersten Planetenradstufe über eine Verbindung fest zu koppeln. In diesem Falle ist das erste Fahrzeugrad über das erste Sonnenrad der ersten Planetenradstufe direkt angetrieben, wobei das zweite Fahrzeugrad über das zweite Sonnenrad der zweiten Planetenradstufe angetrieben ist.

Beiden Ausführungsvarianten der Kopplung zwischen der ersten Planetenradstufe und der zweiten Planetenradstufe ist gemeinsam, dass ein Planetenträger der zweiten Planetenradstufe mit einem Gehäuse der Getriebeanordnung verbunden ist und die auftretenden Drehmomente abstützt.

Durch die Kopplung zwischen dem Rotor der E-Maschine und dem ersten Hohlrad der ersten Planetenradstufe, d.h. der Antriebseinleitungsstelle, kann eine kompaktbauende E-Achse bereitgestellt werden, die als bauliche Einheit ausgeführt ist und insbesondere durch Realisierung einer Standübersetzung betragsmäßig < 1 (gilt für die erste Planetenradstufe mit Stufenplanetenrädern) ein Differentialgetriebe überflüssig macht, das andernfalls in die Achse zu integrieren wäre.

Vorteile der Erfindung

Die erfindungsgemäß vorgeschlagene Lösung ermöglicht die Verbindung von Getriebeanordnung und E-Maschine zwischen dem Rotor der E-Maschine und dem ersten Hohlrad des Planetengetriebes. Dadurch besteht die Möglichkeit der Ausbildung einer baulichen Einheit aus E-Maschine und der erfindungsgemäß vorgeschlagenen Getriebeanordnung. Der Antrieb erfolgt über das erste Hohlrad der ersten Planetenstufe, wobei die erste Planetenstufe als Stufenplanet ausgeführt wird. Durch diese Ausführungsform kann eine Standübersetzung erreicht werden, die betragsmäßig < 1 ist. Die erfindungsgemäß vorgeschlagene Lösung ermöglicht zwei Ausführungsvarianten der Kopplung der ersten Planetenradstufe mit der zweiten Planetenradstufe. Aufgrund der Realisierung von Standübersetzungen betragsmäßig < 1 kann ein Differentialgetriebe entfallen. Die Funktion des Differentialgetriebes wird gemäß der beiden Varianten miteinander gekoppelten Planetenradsätze ermöglicht, so dass eine differentialgetriebefreie Ausbildung eines E-Achsenmoduls für ein elektrisch betriebenes Fahrzeug möglich ist.

In einer ersten Kopplungsvariante wird das erste Sonnenrad der ersten Planetenstufe fest mit dem zweiten Sonnenrad der zweiten Planetenradstufe gekoppelt. Das erste Fahrzeugrad wird über den Planetenträger der ersten Planetenstufe angetrieben, während die zweite Planetenstufe ein Negativgetriebe darstellt und das zweite Fahrzeugrad durch das Hohlrad der zweiten Planetenstufe angetrieben wird.

In der zweiten Kopplungsvariante ist der Planetenträger der ersten Planetenstufe fest mit dem zweiten Hohlrad der zweiten Planetenstufe verbunden. Das erste Fahrzeugrad wird gemäß dieser Ausführungsvariante über das erste Sonnenrad der ersten Planetenstufe angetrieben. Die zweite Planetenstufe - wiederum ein Negativgetriebe darstellend - treibt das zweite Rad über das zweite Sonnenrad der zweiten Planetenstufe an. In beiden Ausführungsvarianten der Kopplung zwischen der ersten Planetenradstufe und der zweiten Planetenradstufe wird der Planetenträger der zweiten Planetenradstufe fest mit dem Gehäuse verbunden, so dass die auftretenden Drehmomente abgestützt werden können. Des Weiteren erlaubt die erfindungsgemäße Lösung eine gemeinsame Nutzung der Lagerung für Getriebe und E-Maschine.

Kurze Beschreibung der Zeichnung

Anhand der Zeichnung wird die Erfindung nachstehend eingehender beschrieben.
Es zeigt:

Figur 1 eine schematische Darstellung einer ersten Variante der Kopplung zwischen der ersten Planetenradstufe und der zweiten Planetenradstufe,

Figur 2 ein entsprechendes Schaltbild der vorgeschlagenen Getriebeanordnung,

Figur 3 eine zweite Ausführungsvariante der Kopplung zwischen der ersten Planetenradstufe und der zweiten Planetenradstufe und

Figur 4 ein dementsprechendes Schaltbild der erfindungsgemäß vorgeschlagenen Getriebeanordnung.

Ausführungsvarianten

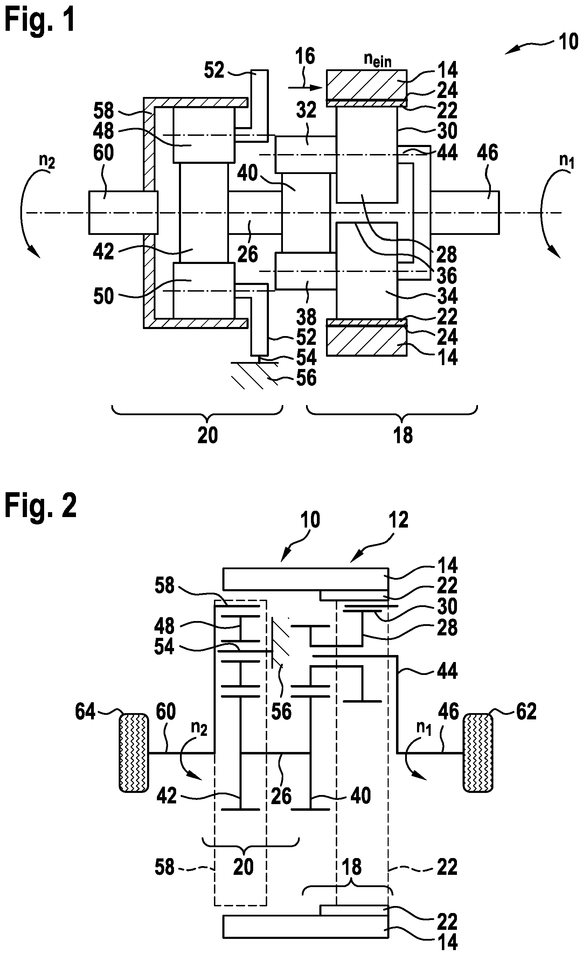

Figur 1 ist eine erste Ausführungsvariante einer Kopplung zwischen einer ersten Planetenradstufe 18 und einer zweiten Planetenradstufe 20 zu entnehmen.
Eine erfindungsgemäß vorgeschlagene Getriebeanordnung 10 ist in eine E-Maschine 12 integriert. Ein Rotor 14 der E-Maschine rotiert mit einer Drehzahl $n_{ein}$, welche eine Eintrittsdrehzahl 16 für die Getriebeanordnung 10 darstellt. Die Getriebeanordnung 10 umfasst die erste Planetenradstufe 18 sowie die zweite Planetenradstufe 20. Wie Figur 1 zeigt, sind der Rotor 14 der E-Maschine 12 und ein erstes Hohlrad 22 der ersten Planetenradstufe 18 miteinander verbunden. Die Verbindung kann beispielsweise durch eine Schrumpfverbindung 24 gegeben sein, gemäß der das erste Hohlrad 22 der ersten Planetenradstufe 18 in den Innenumfang des Rotors der E-Maschine 12 eingeschrumpft wird. Die Verbindung zwischen dem Rotor 14 und dem ersten Hohlrad 22 der ersten Planetenradstufe 18 kann anstelle durch die Schrumpfverbindung 24 auch durch eine Verschraubung der beiden Komponenten miteinander erfolgen oder auch dadurch gegeben sein, dass der Rotor 14 der E-Maschine 12 und das erste Hohlrad 22 der ersten Planetenradstufe 18 eine bauliche Einheit bilden, d.h. als ein Stück gefertigt sind.

Die erste Planetenradstufe 18 umfasst neben dem ersten Hohlrad 22 einen ersten Satz von Stufenplanetenrädern 28 und 34 (hier sind lediglich zwei dargestellt). Planetenräder der ersten Planetenradstufe 18 umfassen eine erste Stufe 30 bzw. 36 sowie eine zweite Stufe 32 und 38. Jeweils die zweiten Stufen 32 bzw. 38 der Stufenplanetenräder 28 und 34 kämmen mit einem ersten Sonnenrad 40 der ersten Planetenradstufe 18. Die beiden Stufenplanetenräder 28, 34 sind an einem Planetenträger 44 aufgenommen. Dieser treibt eine erste Abtriebswelle 46 mit einer ersten Drehzahl $n_1$ an, die sich zu einem ersten Fahrzeugrad 62 erstreckt und dieses antreibt.

Die zweite Planetenradstufe 20 umfasst ein zweites Sonnenrad 42. Das zweite Sonnenrad 42 kämmt mit einem zweiten Satz von Planetenrädern 48 und 50 (auch hier sind nur zwei dargestellt), die ihrerseits an einem Planetenträger 52 aufgenommen sind. Darüber hinaus laufen das erste Planetenrad 48 sowie das zweite Planetenrad 50 innerhalb eines zweiten Hohlrades 58 der zweiten Planetenradstufe 20 um. Das zweite Hohlrad 58 treibt eine zweite Abtriebswelle 60 mit einer Drehzahl $n_2$ an, wodurch ein zweites Fahrzeugrad 64 angetrieben ist.

Gemäß der in Figur 1 dargestellten Ausführungsvariante sind die beiden Planetenradstufen 18 und 20 über eine Koppelwelle 26 drehfest miteinander gekoppelt, welche das erste Sonnenrad 40 und das zweite Sonnenrad 42 drehfest miteinander verbindet.

Der Darstellung gemäß Figur 2 ist ein Schaltbild der Getriebeanordnung gemäß der Darstellung in Figur 1 zu entnehmen, gemäß der das erste Sonnenrad 40 und das zweite Sonnenrad 42 durch eine starre Koppelwelle 26 miteinander gekoppelt sind.

Im Vergleich zu den Fahrzeugrädern 62, 64 ist das Schaltbild der Getriebeanordnung 10 vergrößert dargestellt und entspricht im Wesentlichen der schematischen Darstellung der einzelnen Komponenten gemäß Figur 1.

Den Darstellungen gemäß der Figuren 1 und 2 ist überdies gemeinsam, dass der Planetenträger 52 der Planetenräder 48 und 50 mittels einer Verbindung 54 mit einem Gehäuse 56 der Getriebeanordnung 10 verbunden ist. Dadurch können die auftretenden Drehmomente abgestützt werden.

Die Übersetzung der Getriebeanordnung 10 gemäß Figur 2 ist gegeben durch:

$$ü = n_{ein}/n = 2 \cdot (ü_{0,1} − 1)/ü_{0,1}$$

Wird beispielsweise ü = +5 gesetzt, ergibt sich für die Gesamtübersetzung ü eine erforderliche Standübersetzung der ersten Planetenradstufe 18 gegeben durch:

$$ü_{0,1} = 2/(2 − ü), \text{ d.h. } = -0{,}667.$$

Für die zweite Planetenradstufe 20 ergibt sich die Standübersetzung

$$ü_{0,2} = (1 − ü_{0,1})/ü_{0,1} = - ü/2 = -2{,}5.$$

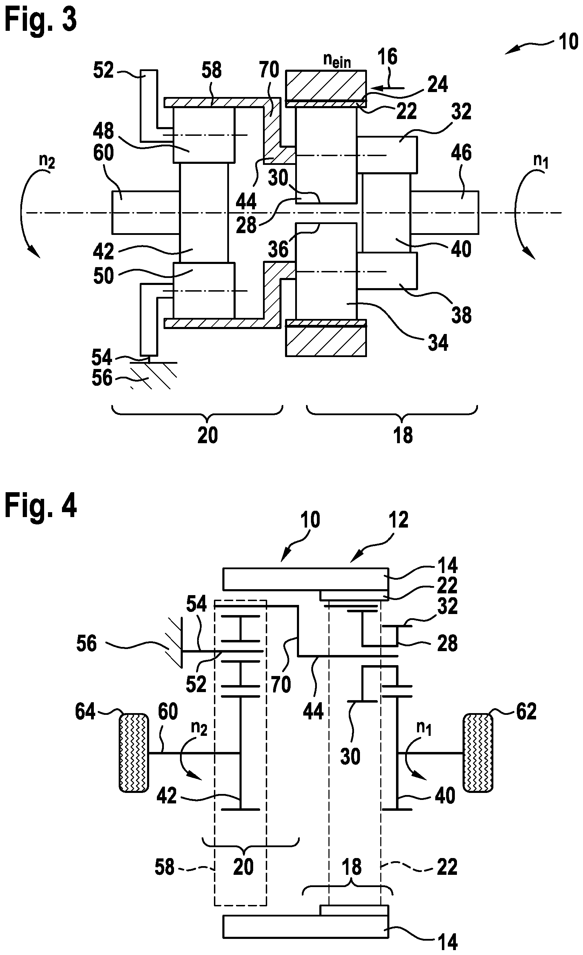

Figur 3 ist eine zweite Ausführungsvariante einer mechanischen Kopplung zwischen der ersten Planetenradstufe 18 und der zweiten Planetenradstufe 20 zu entnehmen.

Figur 3 zeigt die Getriebeanordnung 10, bei der eine Eintrittsdrehzahl 16 gegeben durch die Drehzahl des Rotors 14 der E-Maschine 12 in die erste Planetenradstufe 18 eingeleitet wird. Dazu ist der Rotor 14 der E-Maschine 12 mit dem ersten Hohlrad 22 der ersten Planetenradstufe 18 beispielsweise über eine Schrumpfverbindung 24 miteinander verbunden. Anstelle der Schrumpfverbindung 24 kann auch eine andere mechanische Verbindung, beispielsweise eine Verschraubung zwischen dem Rotor 14 und dem ersten Hohlrad 22 der ersten Planetenradstufe 18 dargestellt werden. Es besteht ebenfalls die Möglichkeit, den Rotor 14 der E-Maschine 12 und das erste Hohlrad 22 der ersten Planetenradstufe 18 als ein Bauteil zu fertigen, so dass eine bauliche Einheit vorliegt.

Gemäß der Darstellung in Figur 3 umfasst die erste Planetenradstufe 18 analog zur ersten Ausführungsvariante gemäß Figur 1 die Stufenplanetenräder 28 bzw. 34, die jeweils ersten Stufen 30, 36 sowie zweite Stufen 32 bzw. 38 aufweisen. Die beiden zweiten Stufen 32 und 38 gemäß der Ausführungsvariante in Figur 3 kämmen mit dem ersten Sonnenrad 40 der ersten Planetenradstufe 18. Dieses wiederum treibt die erste Abtriebswelle 46, die sich gemäß der Darstellung in Figur 4 zum ersten Fahrzeugrad 62 erstreckt, mit einer Drehzahl $n_1$ an.

Demgegenüber umfasst die zweite Planetenradstufe 20 gemäß der zweiten Ausführungsvariante in Figur 3 das zweite Sonnenrad 42, welches seinerseits die zweite Abtriebswelle 60 antreibt, die mit einer Drehzahl $n_2$ rotiert und sich zum zweiten Fahrzeugrad 64 erstreckt.

Darüber hinaus umfasst die zweiten Planetenradstufe 20 einen Satz von Planetenrädern 48 bzw. 50 (hier sind ebenfalls nur zwei dargestellt), die an dem Planetenträger 52 aufgenommen sind. Der Planetenträger 52 wiederum stützt sich mittels einer Verbindung 54 am Gehäuse 56 der Getriebeanordnung 10 ab, so dass die auftretenden Drehmomente abgestützt werden können.

Gemäß der in Figur 3 dargestellten Ausführungsvariante erfolgt die Kopplung der ersten Planetenradstufe 18 und der zweiten Planetenradstufe 20 durch eine Verbindung 70 zwischen dem zweiten Hohlrad 58 der zweiten Planetenradstufe 20 und dem Planetenradträger 44 der ersten Planetenradstufe 18. Die in der Ausführungsvariante gemäß Figur 1 zwischen dem ersten Sonnenrad 40 und dem zweiten Sonnenrad 42 verlaufende Koppelwelle 26 ist in der Ausführungsvariante gemäß Figur 3 entfallen.

Gemäß der in Figur 3 dargestellten Ausführungsvariante der Kopplung zwischen der ersten Planetenradstufe 18 und der zweiten Planetenradstufe 20 ist der Planetenträger 44 der ersten Planetenradstufe 18 fest verbunden mit dem zweiten Hohlrad 58 der zweiten Planetenradstufe 20. In diesem Falle wird - vergleiche auch Darstellung gemäß Figur 4 - das erste Fahrzeugrad 62 über das erste Sonnenrad 40 der ersten Planetenradstufe 18 angetrieben. Die zweite Planetenradstufe 20 stellt ein Negativgetriebe dar, wobei der Abtrieb an das zweite Fahrzeugrad 64 über das zweite Sonnenrad 42 der zweiten Planetenradstufe 20 erfolgt. Analog zur in Figur 1 dargestellten Ausführungsvariante der Kopplung ist der Planetenträger 52 der zweiten Planetenradstufe 20 über die Verbindung 54 fest mit dem Gehäuse 56 der Getriebeanordnung 10 verbunden und stützt die auftretenden Drehmomente ab.

Figur 4 zeigt das Schaltbild der Getriebeanordnung 10 bei der Kopplung der ersten Planetenradstufe 18 mit der zweiten Planetenradstufe 20, wie sie in Figur 3 dargestellt ist. Die Komponenten der Getriebeanordnung 10 in Figur 4 entsprechen denjenigen in Figur 3.

Die Übersetzung der Getriebeanordnung 10 gemäß der Darstellung in Figur 3 ergibt sich zu $ü = n_1/n = 2/ü_{0,1}$. Bei einem Beispiel für eine Gesamtübersetzung $ü = -5$ ergibt sich eine Standübersetzung für die erste Planetenradstufe 18 zu $ü_{0,1} = 2/ü$ bei $ü = -5$ zu $ü_{0,1} = -0,4$.

Für die zweite Planetenradstufe 20 ergibt sich die Standübersetzung zu $ü_{0,2} = ü_{0,1} - 1 = (2 - ü)/ü = ü_{0,2} = -1,4$. Bei dieser Ausführungsvariante wird die Antriebszahl zum Antrieb hin negiert, d.h. die Übersetzung ist negativ. Damit ist die Bedingung, dass beide Standübersetzung en kleiner als Null sein müssen zu erfüllen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Getriebeanordnung (10) mit einer ersten Planetenradstufe (18) und einer zweiten Planetenradstufe (20), wobei die Getriebeanordnung (10) durch einen Rotor (14) einer E-Maschine (12) angetrieben ist und die erste Planetenradstufe (18) ein erstes Sonnenrad (40) und die zweite Planetenradstufe (20) ein zweites Sonnenrad (42) umfasst, wobei Stufenplanetenräder (28, 34) der ersten Planetenradstufe (18) mit dem ersten Sonnenrad (40) und Planetenräder (48, 50) der zweiten Planetenradstufe (20) mit dem zweiten Sonnenrad (42) kämmen, wobei entweder das erste Sonnenrad (40) der ersten Planetenradstufe (18) mit dem zweiten Sonnenrad (42) der zweiten Planetenradstufe (20) über eine Koppelwelle (26) gekoppelt ist, oder alternativ ein Planetenträger (44) der ersten Planetenradstufe (18), an dem die Stufenplanetenräder (28, 34) der ersten Planetenradstufe (18) aufgenommen sind, mit einem zweiten Hohlrad (58) der zweiten Planetenradstufe (20) verbunden ist, mit dem die Planetenräder (48, 50) der zweiten Planetenradstufe (20) kämmen, **dadurch gekennzeichnet, dass** ein erstes Hohlrad (22) der ersten Planetenradstufe (18) mit dem Rotor (14) eine bauliche Einheit bildet.

2. Getriebeanordnung (10) gemäß Anspruch 1, **dadurch gekennzeichnet, dass** das erste Hohlrad (22) mittels einer Schrumpfverbindung (24) in den Rotor (14) der E-Maschine (12) eingeschrumpft ist.

3. Getriebeanordnung (10) gemäß Anspruch 1, **dadurch gekennzeichnet, dass** das erste Hohlrad (22) und der Rotor (14) der E-Maschine (12) als ein Bauteil gefertigt sind.

4. Getriebeanordnung (10) gemäß Anspruch 1, **dadurch gekennzeichnet, dass** ein erstes Fahrzeugrad (62) über die Planetenträger (44) der ersten Planetenradstufe (18) angetrieben ist.

5. Getriebeanordnung (10) gemäß Anspruch 1, **dadurch gekennzeichnet, dass** ein zweites Fahrzeugrad (64) über das zweite Hohlrad (58) der zweiten Planetenradstufe (20) angetrieben ist.

6. Getriebeanordnung (10) gemäß Anspruch 1, **dadurch gekennzeichnet, dass** ein Planetenträger (52) der zweiten Planetenradstufe (20) mit einem Gehäuse (56) der Getriebeanordnung (10) verbunden ist und die Drehmomente abstützt.

7. Getriebeanordnung (10) gemäß Anspruch 1, **dadurch gekennzeichnet, dass** der Planetenträger (44) der ersten Planetenradstufe (18) mit dem zweiten Hohlrad (58) der zweiten Planetenradstufe (20) über eine Verbindung (70) fest gekoppelt ist.

8. Getriebeanordnung (10) gemäß Anspruch 1, **dadurch gekennzeichnet, dass** das erste Fahrzeugrad (62) über das erste Sonnenrad (40) der ersten Planetenradstufe (18) angetrieben ist.

9. Getriebeanordnung (10) gemäß Anspruch 1, **dadurch gekennzeichnet, dass** das zweite Fahrzeugrad (64) über das zweite Sonnenrad (42) der zweiten Planetenradstufe (20) angetrieben ist.

## Claims

1. Transmission arrangement (10) comprising a first planetary gear stage (18) and a second planetary gear stage (20), wherein the transmission arrangement (10) is driven by a rotor (14) of an electric machine (12), and the first planetary gear stage (18) comprises a first sun gear (40) and the second planetary gear stage (20) comprises a second sun gear (42), wherein stage planetary gears (28, 34) of the first planetary gear stage (18) mesh with the first sun gear (40) and planetary gears (48, 50) of the second planetary gear stage (20) mesh with the second sun gear (42), wherein either the first sun gear (40) of the first planetary gear stage (18) is coupled to the second sun gear (42) of the second planetary gear stage (20) via a coupling shaft (26) or, alternatively, a planet carrier (44) of the first planetary gear stage (18), on which the stage planetary gears (28, 34) of the first planetary gear stage (18) are accommodated, is connected to a second internal gear (58) of the second planetary gear stage (20), with which the planetary gears (48, 50) of the second planetary gear stage (20) mesh, **characterized in that** a first internal gear (22) of the first planetary gear stage (18) forms a structural unit with the rotor (14).

2. Transmission arrangement (10) according to Claim 1, **characterized in that** the first internal gear (22) is shrunk into the motor (14) of the electric machine (12) by means of a shrink-fitting connection (24).

3. Transmission arrangement (10) according to Claim 1, **characterized in that** the first internal gear (22) and the rotor (14) of the electric machine (12) are manufactured as one component.

4. Transmission arrangement (10) according to Claim 1, **characterized in that** a first vehicle wheel (62) is driven via the planet carriers (44) of the first planetary gear stage (18).

5. Transmission arrangement (10) according to Claim 1, **characterized in that** a second vehicle wheel (64) is driven via the second internal gear (58) of the second planetary gear stage (20).

6. Transmission arrangement (10) according to Claim 1, **characterized in that** a planet carrier (52) of the second planetary gear stage (20) is connected to a housing (56) of the transmission arrangement (10) and supports the torques.

7. Transmission arrangement (10) according to Claim 1, **characterized in that** the planet carrier (44) of the first planetary gear stage (18) is fixedly coupled to the second internal gear (58) of the second planetary gear stage (20) via a connection (70).

8. Transmission arrangement (10) according to Claim 1, **characterized in that** the first vehicle wheel (62) is driven via the first sun gear (40) of the first planetary gear stage (18).

9. Transmission arrangement (10) according to Claim 1, **characterized in that** the second vehicle wheel (64) is driven via the second sun gear (42) of the second planetary gear stage (20).

## Revendications

1. Agencement de transmission (10) comprenant un premier étage de pignons satellites (18) et un deuxième étage de pignons satellites (20), l'agencement de transmission (10) étant entraîné par un rotor (14) d'une machine électrique (12), et le premier étage de pignons satellites (18) comprenant une première roue solaire (40) et le deuxième étage de pignons satellites (20) comprenant une deuxième roue solaire (42), les pignons satellites étagés (28, 34) du premier étage de pignons satellites (18) engrenant avec la première roue solaire (40) et les pignons satellites (48, 50) du deuxième étage de pignons satellites (20) engrenant avec la deuxième roue solaire (42), soit la première roue solaire (40) du premier étage de pignons satellites (18) étant couplée à la deuxième roue solaire (42) du deuxième étage de pignons satellites (20) par l'intermédiaire d'un arbre de couplage (26), soit en variante un porte-satellites (44) du premier étage de pignons satellites (18), sur lequel les pignons satellites étagés (28, 34) du premier étage de pignons satellites (18) sont reçus, étant relié à une deuxième couronne (58) du deuxième étage de pignons satellites (20), avec laquelle les pignons satellites (48, 50) du deuxième étage de pignons satellites (20) engrènent, **caractérisé en ce qu'**une première couronne (22) du premier étage de pignons satellites (18) forme une unité de construction avec le rotor (14).

2. Agencement de transmission (10) selon la revendication 1, **caractérisé en ce que** la première couronne (22) est frettée dans le rotor (14) de la machine électrique (12) au moyen d'une liaison frettée (24).

**3.** Agencement de transmission (10) selon la revendication 1, **caractérisé en ce que** la première couronne (22) et le rotor (14) de la machine électrique (12) sont fabriqués sous la forme d'un seul composant.

**4.** Agencement de transmission (10) selon la revendication 1, **caractérisé en ce qu'**une première roue de véhicule (62) est entraînée par l'intermédiaire des porte-satellites (44) du premier étage de pignons satellites (18).

**5.** Agencement de transmission (10) selon la revendication 1, **caractérisé en ce qu'**une deuxième roue de véhicule (64) est entraînée par l'intermédiaire de la deuxième couronne (58) du deuxième étage de pignons satellites (20).

**6.** Agencement de transmission (10) selon la revendication 1, **caractérisé en ce qu'**un porte-satellites (52) du deuxième étage de pignons satellites (20) est relié à un boîtier (56) de l'agencement de transmission (10) et soutient les couples de rotation.

**7.** Agencement de transmission (10) selon la revendication 1, **caractérisé en ce que** le porte-satellites (44) du premier étage de pignons satellites (18) est couplé de manière fixe à la deuxième couronne (58) du deuxième étage de pignons satellites (20) par l'intermédiaire d'une liaison (70).

**8.** Agencement de transmission (10) selon la revendication 1, **caractérisé en ce que** la première roue de véhicule (62) est entraînée par l'intermédiaire de la première roue solaire (40) du premier étage de pignons satellites (18).

**9.** Agencement de transmission (10) selon la revendication 1, **caractérisé en ce que** la deuxième roue de véhicule (64) est entraînée par l'intermédiaire de la deuxième roue solaire (42) du deuxième étage de pignons satellites (20).

# Fig. 1

# Fig. 2

# Fig. 3

10

52 58 70 $n_{ein}$ 16
24
22
48 32
60 46
$n_2$ $n_1$
30
44
28
42
50 36 40
38
34
54
56

20 18

# Fig. 4

10 12
14
54 22
32
56 28
52 70 44
30
64 60
$n_2$ $n_1$
42 40
62
20
58 18 22
14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011102749 A1
- DE 102015218252 A1
- US 5845732 A